# EUROPEAN PATENT SPECIFICATION

(11) **EP 3 282 134 B1**
(45) Date of publication and mention of the grant of the patent: **19.02.2020**
(21) Application number: 17180860.3
(22) Date of filing: 12.07.2017
(51) Int. Cl.: F16B 5/02, F16F 1/373

(54) **EXTERIOR FIXING MECHANISM FOR ANALYSIS DEVICE**
EXTERNE FIXIERVORRICHTUNG FÜR ANALYSEVORRICHTUNG
MÉCANISME DE FIXATION EXTÉRIEURE POUR DISPOSITIF D'ANALYSE

(30) Priority: 12.08.2016 JP 2016003941 U
(43) Date of publication of application: 14.02.2018
(73) Proprietor: Shimadzu Corporation, Kyoto 604-8511 (JP)
(72) Inventor: MAJI, Takeshi, Kyoto-shi, Kyoto 6048511 (JP)
(74) Representative: Becker & Kurig Partnerschaft Patentanwälte PartmbB

(56) References cited:
- EP-A1- 1 860 006
- DE-A1- 19 916 098
- DE-U1- 29 814 338
- US-A- 5 570 867
- US-A1- 2003 002 919

## Description

### BACKGROUND OF THE DISCLOSURE

### Field of the Disclosure

The disclosure relates to an exterior fixing mechanism for an analysis device which fixes an exterior configured to accommodate parts used for analysis therein.

### Description of Related Art

An exterior for an analytical device for an analysis device is generally constituted of a plurality of divided parts. Such exterior parts are fixed to each other using a fixing member while accommodating parts used for analysis therein.

Examples of such a fixing method include a method of fixing exterior parts using a claw part for engagement such as a snap fit. To be specific, a fixing method in which a claw part for engagement is provided in one exterior part of neighboring exterior parts, a concave part configured to engage with the claw part is provided in the other exterior part, the exterior parts overlap, and thus the claw part is engaged with the concave part is exemplified (for example, refer to Japanese Unexamined Patent Application Publication No. H06-22380).

In the device disclosed in Japanese Unexamined Patent Application Publication No. H06-22380, a lock pin (a claw part) provided in one exterior part is engaged with a concave part of the other exterior part so that the exterior parts are fixed.

Using such a fixing method, the exterior parts can be fixed through a simple operation in which the plurality of exterior parts overlap.

US 2003/002919 A1 discloses a collar including a larger diameter flange and a cylindrical body. The cylindrical body has female threads formed along an inner circumferential surface of the cylindrical body. A stopper is provided in the larger diameter flange of the collar. A vibration damping member includes a tubular body. The cylindrical body of the collar is received in a receiving through hole of the tubular body of the vibration damping member. The stopper is located between opposed side walls of a mouth of a recessed opening that is recessed in a mounting portion of a pivot holder. A bolt, which penetrates through a fastening hole of a vehicle body, is threadably engaged with the female threads of the cylindrical body of the collar, so that the pivot holder is floatingly supported relative to a vehicle body.

### SUMMARY OF THE DISCLOSURE

There have been concerns about limitations on a manufacturing method of the above-described fixing method in the related art. To be specific, in the above-described fixing method in the related art, a tip of the claw part is bent in a hook shape. For this reason, a method of manufacturing a plate-like member such as air-pressure molding and sheet metal working cannot be used and thus a method of pouring a material into a mold such as injection molding needs to be used. Furthermore, a formwork needs to be prepared in this method and thus there are concerns about an increase in initial cost of a mold and the like.

Also, in the above-described fixing method in the related art, when variation in shape occurs while the claw part is manufactured, the claw part is likely not to be sufficiently engaged with the concave part when the exterior parts overlap.

The present invention is provided by appended claim 1. Beneficial embodiments are provided by the dependent claims. The following disclosure serves a better understanding of the invention. Accordingly, the disclosure was made in view of such circumstances and the disclosure provides an exterior fixing mechanism which can be manufactured using a low-cost manufacturing method while fixing exterior members through a simple operation. Furthermore, the disclosure provides an exterior fixing mechanism which can reliably fix exterior members even when variation in shapes of parts occurs during manufacture.
(1) An exterior fixing mechanism according to the disclosure is an exterior fixing mechanism for an analysis device which fixes an exterior configured to accommodate parts used for analysis therein. The exterior fixing mechanism includes a first exterior member and a second exterior member. The first exterior member includes an elastic body with a groove formed in an outer circumferential surface, wherein the elastic body is cylindrical and the groove is ring-shaped. The second exterior member includes a plate-like member having a concave part into which the elastic body is fitted. In the exterior fixing mechanism, the elastic body is inserted into the concave part in a direction in which the plate-like member extends and a circumferential edge of the concave part is fitted into the groove so that the first exterior member and the second exterior member are fixed.
   According to such a configuration, the elastic body is inserted into a concave part of the plate-like member so that the circumferential edge of the concave part of the plate-like member is fitted into the groove of the elastic body and thus the first exterior member and the second exterior member are fixed.
   For this reason, the first exterior member and the second exterior member can be fixed through a simple operation in which the elastic body is merely inserted into the concave part of the plate-like member.
   Also, the plate-like member can be manufactured through air-pressure molding, sheet metal working, or the like.
   For this reason, an exterior fixing mechanism can be manufactured using a low-cost manufacturing method.
   In other words, according to a configuration of the disclosure, an exterior fixing mechanism can be manufactured using a low-cost manufacturing method while fixing exterior members through a simple operation.
   Moreover, when a plurality of plate-like members are manufactured, variation in dimensions of pitches (intervals) of concave parts in the plate-like members occurs in some cases.
   According to a configuration of the disclosure, if circumferential edges of concave parts of plate-like members are engaged with grooves of elastic bodies when the elastic bodies are inserted into the concave parts of the plate-like members, the grooves of the elastic bodies are bent in accordance with the shapes of the concave parts of the plate-like members.
   For this reason, the grooves of the elastic bodies are bent even when variation in dimensions of pitches (intervals) of the concave parts in the plate-like members occurs (even when variation in shapes of the concave parts occurs) so that the elastic bodies can be appropriately engaged with the plate-like members and thus the exterior members can be reliably fixed.
(2) In addition, the concave part may have an inlet into which the elastic body is inserted, and a width of the inlet may be smaller than an outer diameter of the groove.
   According to such a configuration, an elastic body is pressed by an edge of an inlet of a concave part in a plate-like member, is elastically deformed, and is inserted into the concave part. The edge of the inlet of the concave part in the plate-like member is engaged with the elastic body in a state which the elastic body is inserted into the concave part of the plate-like member.
   For this reason, the elastic body can be suppressed from being removed from the inside of the concave part due to oscillation or the like in a state in which the elastic body is inserted into the concave part of the plate-like member.
   As a result, the first exterior member and the second exterior member can be reliably fixed.
(3) In addition, the first exterior member includes a rod-like member fitted inside the elastic body in an axial direction thereof.
   According to the invention, the elastic body is supported by the rod-like body.
   For this reason, the elastic body can be suppressed from being excessively bent.
(4) In addition, an outer circumferential surface of the rod-like member is formed in a polygonal shape.
   According to the invention, a gap (space) is provided between an inner circumferential surface of an elastic body and an outer circumferential surface of a rod-like body.
   For this reason, when the elastic body is inserted into a concave part of a plate-like member, the gap between the inner circumferential surface of the elastic body and the outer circumferential surface of the rod-like body functions as a thinning margin and thus the elastic body can be appropriately bent.
(5) In addition, the rod-like member may have a through hole extending in the axial direction thereof and may be fixed by fastening a bolt inserted through the through hole to a fixed position.

According to such a configuration, a rod-like member can be disposed at a fixed position by fastening a bolt. Furthermore, the rod-like body functions as a spacer and an elastic body can minimize deformation of the bolt due to the fastening when the bolt is fastened.

According to the disclosure, a first exterior member and a second exterior member can be fixed through a simple operation in which an elastic body is merely inserted into a concave part of a plate-like member. Furthermore, the plate-like member can be manufactured through air-pressure molding, sheet metal working, or the like. In other words, according to the disclosure, an exterior fixing mechanism can be manufactured using a low-cost manufacturing method while fixing the exterior members through a simple operation. According to the disclosure, if a circumferential edge of the concave part of the plate-like member is engaged with a groove of an elastic body when the elastic body is inserted into the concave part of the plate-like member, the groove of the elastic body is bent in accordance with a shape of the concave part of the plate-like member. For this reason, a groove of an elastic body is bent even when variation in a shape of a concave part in a plate-like member occurs during manufacture so that the elastic body can be appropriately engaged with the plate-like member and thus the exterior members can be reliably fixed.

### BRIEF DESCRIPTION OF THE DRAWINGS

FIG. 1 is a diagram showing a configuration of an exterior fixing mechanism according to an embodiment of the disclosure and illustrates a state in which a first exterior member is engaged with a second exterior member.
FIG. 2 is a diagram showing a configuration of the exterior fixing mechanism and illustrates a state in which a first exterior member 1 is separated from a second exterior member 2.
FIG. 3 is a cross-sectional view taken along line A-A of FIG. 1.
FIG. 4 is an exploded perspective view of members constituting the exterior fixing mechanism.

### DETAILED DESCRIPTION OF THE DISCLOSURE

### 1. Configuration of exterior fixing mechanism

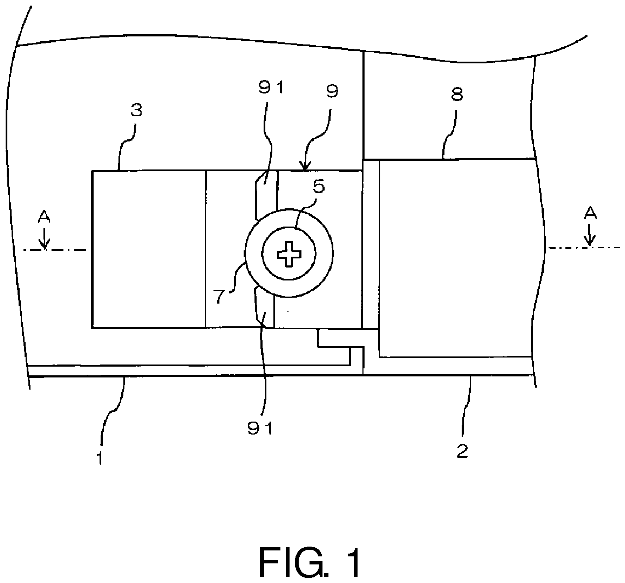

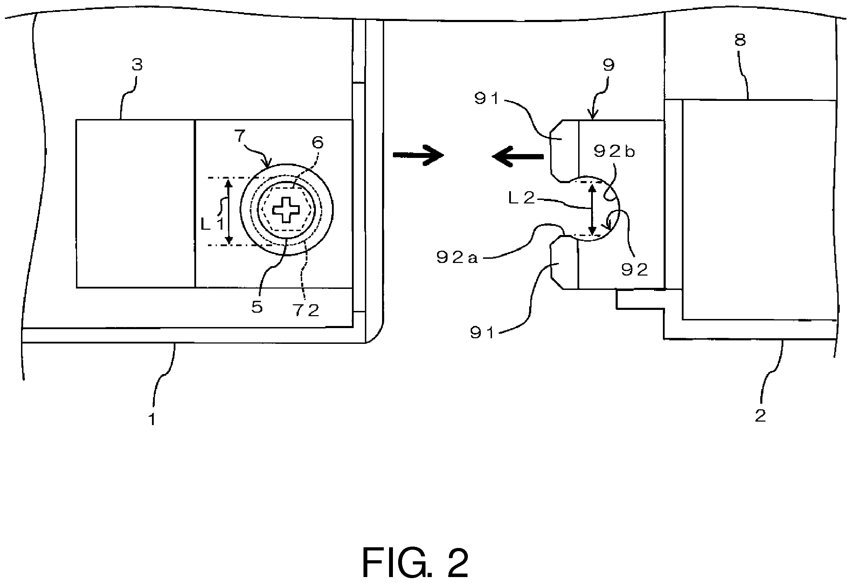

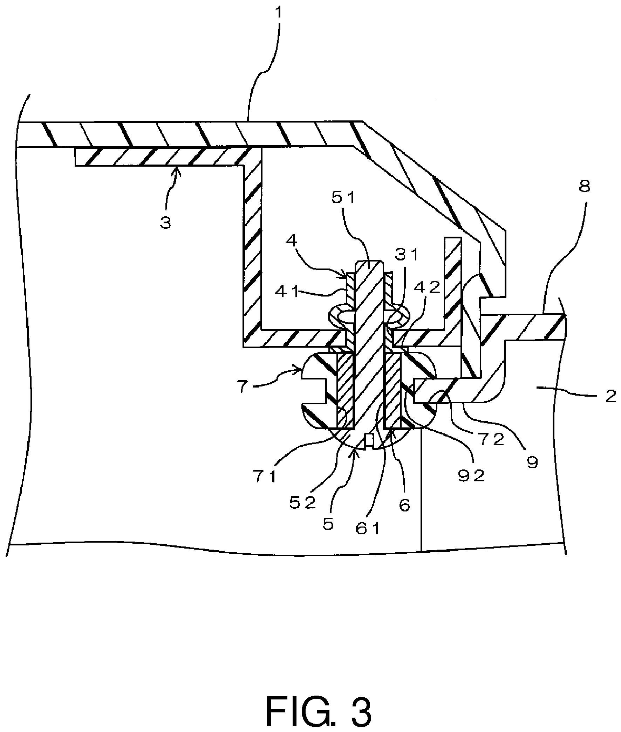

FIG. 1 is a diagram showing a configuration of an exterior fixing mechanism according to an embodiment of the disclosure and illustrates a state in which a first exterior member 1 is engaged with a second exterior member 2. FIG. 2 is a diagram showing a configuration of the exterior fixing mechanism and illustrates a state in which the first exterior member 1 is separated from the second exterior member 2. FIG. 3 is a cross-sectional view taken along line A-A of FIG. 1.

The exterior fixing mechanism includes the first exterior member 1 and the second exterior member 2 which serve as an exterior for an analytical device. The first exterior member 1 and the second exterior member 2 are fixed to each other through a configuration which will be described below. The exterior for the analytical device is, for example, an exterior used for a Fourier transform infrared (FTIR) spectrophotometer.

The first exterior member 1 and the second exterior member 2 constitute a casing used to accommodate parts used for analysis (not shown) therein. The first exterior member 1 and the second exterior member 2 have predetermined thicknesses. The first exterior member 1 and the second exterior member 2 are made of, for example, a resinous material and are formed through air-pressure molding or the like. The first exterior member 1 and the second exterior member 2 overlap and are fixed (joined) to form one exterior.

A base member 3 is provided in the first exterior member 1. As shown in FIG. 3, the base member 3 is formed in a bent plate shape and has a predetermined thickness. The base member 3 is made of, for example, a resinous material and is formed through air-pressure molding or the like. An insertion hole 31 is formed in a central portion of the base member 3. The insertion hole 31 passes through the base member 3 in a thickness direction thereof. The base member 3 is attached to an inner surface of the first exterior member 1 through an end thereof adhered or welded to the inner surface thereof. A nut 4 is inserted into the insertion hole 31 of the base member 3.

The nut 4 is a so-called self-locking nut and includes a tubular part 41 and a flange part 42. The tubular part 41 is formed in a cylindrical shape. A screw thread (not shown) is formed in an inner circumferential surface of one end of the tubular part 41. The flange part 42 protrudes outward in a radial direction thereof from the other end of the tubular part 41. A bolt 5 (an axis 51 of the bolt 5) is attached to the nut 4 (the tubular part 41 of the nut 4). The flange part 42 of the nut 4 and a head 52 of the bolt 5 are disposed at an interval and a rod-like body 6 and an elastic body 7 are disposed therebetween.

Note that, although the nut 4 is attached to the base member 3 by being caulked as will be described below, the nut 4 may be attached to the base member 3 through adhering, welding, or the like. In addition, the nut 4 may be directly attached to the first exterior member 1.

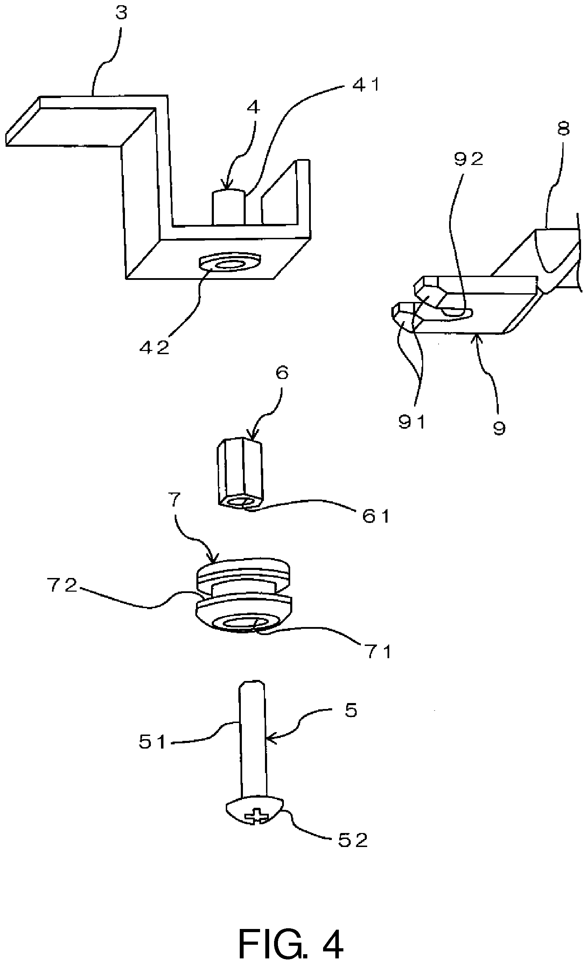

FIG. 4 is an exploded perspective view of members constituting the exterior fixing mechanism.

As shown in FIGS. 3 and 4, the rod-like body 6 is made of, for example, a metallic material and is formed in a prismatic shape. A shape of the rod-like body 6 when viewed in an axial direction thereof is formed to be a hexagonal shape. A through hole 61 is formed in the rod-like body 6. A shape of the through hole 61 when viewed in the axial direction thereof is a circular shape and the through hole 61 passes through a central portion of the rod-like body 6 in the axial direction thereof. As shown in FIG. 3, an axis 51 of the bolt 5 is inserted through the through hole 61 of the rod-like body 6.

The elastic body 7 is made of, for example, a rubber material and is formed in a cylindrical shape as shown in FIGS. 3 and 4. A through hole 71 and a groove 72 are formed in the elastic body 7. A shape of the through hole 71 when viewed in an axial direction thereof is a circular shape and the through hole 71 passes through a central portion of the elastic body 7 in the axial direction thereof. The groove 72 recedes to have a ring shape inward in a radial direction thereof from an outer circumferential surface of the elastic body 7. As the elastic body 7 with such a shape, for example, a generally commercially available grommet can be used. As shown in FIG. 2, an outer diameter (a diameter of an outer circumferential surface) of the groove 72 is L1. As shown in FIG. 3, the rod-like body 6 is inserted through the through hole 71 of the elastic body 7.

A plate-like member 9 is provided in the second exterior member 2 via an attachment part 8. The attachment part 8 protrudes from an inner surface of the second exterior member 2. The plate-like member 9 is attached to the attachment part 8. Note that the attachment part 8 and the plate-like member 9 may be integrally formed with the second exterior member 2.

As shown in FIGS. 3 and 4, the plate-like member 9 protrudes from the attachment part 8. The plate-like member 9 is formed in a flat plate shape and has a predetermined thickness. The plate-like member 9 is made of, for example, a resinous material and is formed through air-pressure molding or the like. As shown in FIGS. 2 and 3, a tapered surface 91 and a concave part 92 are formed in the plate-like member 9.

The tapered surface 91 is formed on a tip of the plate-like member 9. The tapered surface 91 is formed to be tapered toward a tip in a protruding direction thereof.

A concave part 92 is formed to recede from a tip of the plate-like member 9 in a protruding direction toward a root side thereof. To be specific, as shown in FIG. 2, an inlet 92a of the concave part 92 recedes with the same width from the tip of the plate-like member 9 in the protruding direction toward the root side thereof. A main part 92b of the concave part 92 continues from the inlet 92a of the concave part 92 and recedes toward the root side thereof. The main part 92b of the concave part 92 is bent to expand toward the root side thereof. A shape of the main part 92b of the concave part 92 when viewed in a passage direction of the concave part 92 (a direction which is perpendicular to a protruding direction of the plate-like member 9) is formed as a part of a circle. A width L2 of the inlet 92a of the concave part 92 is smaller than the outer diameter L1 of the groove 72 of the elastic body 7.

### 2. Attachment of members to exterior member

The base member 3 is fixed to the first exterior member 1 as described above. Furthermore, as shown in FIGS. 3 and 4, the nut 4 is fixed to the base member 3. To be specific, the tubular part 41 of the nut 4 is inserted through the insertion hole 31 of the base member 3 and the tubular part 41 of the nut 4 is caulked and thus the nut 4 is fixed to the base member 3.

Also, the bolt 5, the rod-like body 6, and the elastic body 7 are attached to the base member 3 with the nut 4 fixed thereto.

To be specific, first, the rod-like body 6 is inserted through (fitted into) the through hole 71 of the elastic body 7. At this time, an axis of the rod-like body 6 and an axis of the elastic body 7 overlap. In other words, the rod-like body 6 is fitted into the through hole 71 of the elastic body 7 in the axial direction thereof. Furthermore, as described above, exterior shapes of the rod-like body 6 and the through hole 71 of the elastic body 7 when viewed in the axial direction thereof are a hexagonal shape and a circular shape, respectively. For this reason, a gap (a space) is formed between the through hole 71 of the elastic body 7 and an outer circumferential surface of the rod-like body 6.

The rod-like body 6 and the elastic body 7 in this state are disposed at a position opposite to the nut 4 fixed to the base member 3. At this time, the through hole 61 of the rod-like body 6 communicates with an internal space of the nut 4.

Also, the axis 51 of the bolt 5 is inserted through the through hole 61 of the rod-like body 6 and is also inserted through the internal space of the nut 4.

In this state, the bolt 5 is fastened and the rod-like body 6 and the elastic body 7 are held using the head 52 of the bolt 5 and the flange part 42 of the nut 4. At this time, the rod-like body 6 functions as a spacer used to maintain a constant distance between the head 52 of the bolt 5 and the flange part 42 of the nut 4. Furthermore, the rod-like body 6 is fixed to a predetermined fixed position such that a gap between the rod-like body 6 and the elastic body 7 functions as a thinning margin. To be specific, a gap is generated in a portion of a space between the rod-like body 6 and the elastic body 7 in which a surface portion of the rod-like body 6 is opposite to an edge of the through hole 71 of the elastic body 7. Furthermore, as shown in FIG. 2, the rod-like body 6 is fixed such that the surface portion thereof is on both ends in a direction which is perpendicular to a joining direction (an arrow direction in the drawing) of an exterior member, that is, the gap between the rod-like body 6 and the elastic body 7 is on both ends in the direction which is perpendicular to the joining direction (the arrow direction in the drawing) of the exterior member.

As described above, the bolt 5 is fastened to the nut 4 fixed to the base member 3 so that the rod-like body 6 and the elastic body 7 are provided (fixed) to the base member 3 (the first exterior member 1). In such an example, a position at which the base member 3 is disposed is a fixed position to which the rod-like body 6 and the elastic body 7 are fixed.

The above-described configuration, that is, the base member 3, the nut 4, the bolt 5, the rod-like body 6, and the elastic body 7, is disposed on the inner surface side of the first exterior member 1.

### 3. Fixation of exterior member

The first exterior member 1 and the second exterior member 2 are fixed as follows.

First, as shown in FIG. 2, the first exterior member 1 and the second exterior member 2 are disposed at an interval. At this time, the elastic body 7 and the plate-like member 9 face at an interval such that an axial direction of the elastic body 7 and a passage direction of the concave part 92 of the plate-like member 9 are in the same direction.

In this state, as indicated by arrows of FIG. 2, the first exterior member 1 and the second exterior member 2 are moved toward each other. In this case, the second exterior member 2 may be fixedly disposed and the first exterior member 1 may be moved toward the second exterior member 2 in a direction in which the plate-like member 9 extends, and the first exterior member 1 may be fixedly disposed and the second exterior member 2 may be moved toward the first exterior member 1 in the direction in which the plate-like member 9 extends.

Thus, the elastic body 7 is guided along the tapered surface 91 of the plate-like member 9 and is gradually inserted into the concave part 92 of the plate-like member 9. As described above, the width L2 of the inlet 92a of the concave part 92 in the plate-like member 9 is smaller than the outer diameter L1 of the groove 72 in the elastic body 7. For this reason, when the first exterior member 1 and the second exterior member 2 are moved toward each other, an edge of the inlet 92a of the concave part 92 in the plate-like member 9 comes into contact with the circumferential surface of the groove 72 in the elastic body 7. When the first exterior member 1 and the second exterior member 2 are further moved toward each other, the circumferential surface of the groove 72 in the elastic body 7 is pressed by the edge of the inlet 92a of the concave part 92 in the plate-like member 9 and thus the circumferential surface of the groove 72 in the elastic body 7 is bent to recede. As described above, a gap (a space) is formed between the through hole 71 of the elastic body 7 and the outer circumferential surface of the rod-like body 6. Furthermore, the gap is on both ends in the direction which is perpendicular to the joining direction (the arrow direction in the drawing) of the exterior member. For this reason, the elastic body 7 is appropriately bent using the gap as a thinning margin.

Moreover, when the first exterior member 1 and the second exterior member 2 are further moved toward each other, the groove 72 of the elastic body 7 is inserted into the concave part 92 of the plate-like member 9. At this time, the groove 72 of the elastic body 7 enters the main part 92b of the concave part 92 in the plate-like member 9. Furthermore, the edge of the inlet 92a of the concave part 92 in the plate-like member 9 is engaged with the circumferential surface of the groove 72 in the elastic body 7, which is on an opposite side of a side opposite to the second exterior member 2. The circumferential surface of the groove 72 in the elastic body 7 is appropriately bent in accordance with a shape of the concave part 92 in the plate-like member 9.

In this way, as shown in FIGS. 1 and 3, the elastic body 7 is inserted into the concave part 92 of the plate-like member 9 and a circumferential edge of the concave part 92 in the plate-like member 9 is fitted into the groove 72 of the elastic body 7 so that the first exterior member 1 and the second exterior member 2 are fixed. In this state, the members constituting the exterior fixing mechanism are located on an inner side of the exterior. In this state, the edge of the inlet 92a of the concave part 92 in the plate-like member 9 is engaged with the circumferential surface of the groove 72 in the elastic body 7. For this reason, when oscillation or the like occurs, the edge of the inlet 92a of the concave part 92 in the plate-like member 9 is locked with the circumferential surface of the groove 72 in the elastic body 7 and thus the elastic body 7 is suppressed from being removed from an inside of the concave part 92.

Also, when fixation of the first exterior member 1 and the second exterior member 2 is released, the first exterior member 1 and the second exterior member 2 move away from each other.

Thus, the circumferential surface of the groove 72 in the elastic body 7 is pressed by the edge of the inlet 92a of the concave part 92 in the plate-like member 9 and thus the circumferential surface of the groove 72 in the elastic body 7 is bent to recede and the elastic body 7 is disengaged from the concave part 92 of the plate-like member 9. As described above, the elastic body 7 and the plate-like member 9 are separated from each other and the fixed state of the first exterior member 1 and the second exterior member 2 is released.

In this way, when the first exterior member 1 and the second exterior member 2 are fixed in this way, the first exterior member 1 and the second exterior member 2 are moved toward each other. Furthermore, when the fixed state of the first exterior member 1 and the second exterior member 2 is released, the first exterior member 1 and the second exterior member 2 are moved away from each other. For this reason, an operation of fixing the first exterior member 1 and the second exterior member 2 and an operation of releasing the fixed state can be performed through a simple operation.

### 4. Effects

(1) In this embodiment, the first exterior member 1 and the second exterior member 2 are moved toward each other in a state in which the first exterior member 1 and the second exterior member 2 face each other (refer to FIG. 2) and the elastic body 7 is inserted into the concave part 92 of the plate-like member 9 so that the circumferential edge of the concave part 92 in the plate-like member 9 is fitted into the groove 72 of the elastic body 7 and thus the first exterior member 1 and the second exterior member 2 are fixed as shown in FIG. 3.
   For this reason, the first exterior member 1 and the second exterior member 2 can be fixed through a simple operation in which the first exterior member 1 and the second exterior member 2 are merely moved toward each other and the elastic body 7 is merely inserted into the concave part 92 of the plate-like member 9.
   Also, the plate-like member 9 is manufactured, for example, through air-pressure molding.
   For this reason, the exterior fixing mechanism can be manufactured using a low-cost manufacturing method.
   Also, when a plurality of plate-like members 9 are manufactured, variation in dimensions of pitches (intervals) of concave parts 92 in the plate-like members 9 occurs in some cases.
   In this embodiment, when the elastic body 7 is inserted into the concave part 92 of the plate-like member 9, if the circumferential edge of the concave part 92 in the plate-like member 9 is engaged with the groove 72 of the elastic body 7, the groove 72 of the elastic body 7 is bent in accordance with the shape of the concave part 92 of the plate-like member 9.
   For this reason, even when variation in dimensions of pitches (intervals) of the concave parts 92 in the plate-like members 9 occurs (even when variation in shapes of the concave parts 92 occurs), the groove 72 of the elastic body 7 is bent so that the elastic body 7 and the plate-like member 9 can be appropriately engaged and thus the first exterior member 1 and the second exterior member 2 can be reliably fixed.
(2) In addition, in this embodiment, as shown in FIG. 2, the concave part 92 of the plate-like member 9 has the inlet 92a into which the elastic body 7 is inserted. The width L2 of the inlet 92a of the concave part 92 in the plate-like member 9 is smaller than the outer diameter L1 of the groove 72 of the elastic body 7.
   For this reason, the elastic body 7 is pressed by the edge of the inlet 92a of the concave part 92 in the plate-like member 9, is elastically deformed, and is inserted into the concave part 92. The edge of the inlet 92a of the concave part 92 in the plate-like member 9 is engaged with the circumferential surface of the groove 72 of the elastic body 7, which is on an opposite side of the side opposite to the second exterior member 2 in a state in which the elastic body 7 is inserted into the concave part 92 of the plate-like member 9.
   As a result, when oscillation or the like occurs, the edge of the inlet 92a of the concave part 92 in the plate-like member 9 is locked with the circumferential surface of the groove 72 of the elastic body 7 and thus the elastic body 7 is suppressed from being removed from the inside of the concave part 92.
   Therefore, the first exterior member 1 and the second exterior member 2 can be reliably fixed.
(3) In addition, in this embodiment, as shown in FIGS. 3 and 4, the rod-like body 6 fitted into the through hole 71 of the elastic body 7 in the axial direction thereof is provided in the first exterior member 1.
   For this reason, the elastic body 7 can be supported by the rod-like body 6.
   As a result, the elastic body 7 can be suppressed from being excessively bent.
(4) In addition, in this embodiment, as shown in FIG. 4, the outer circumferential surface of the rod-like body 6 is formed in a hexagonal shape.
   For this reason, a gap (a space) can be provided between the inner circumferential surface of the elastic body 7 and the outer circumferential surface of the rod-like body 6 in a state in which the rod-like body 6 is inserted (fitted) into the through hole 71 of the elastic body 7. Furthermore, as shown in FIG. 2, the rod-like body 6 is fixed such that the surface portion thereof is on both ends in the direction which is perpendicular to the joining direction (the arrow direction in the drawing) of the exterior member. In other words, the gap between the rod-like body 6 and the elastic body 7 is on both ends in the direction which is perpendicular to the joining direction (the arrow direction in the drawing) of the exterior member.
   As a result, when the elastic body 7 is inserted into the concave part 92 of the plate-like member 9, the elastic body 7 can be appropriately bent using the gap between the inner circumferential surface of the elastic body 7 and the outer circumferential surface of the rod-like body 6 as a thinning margin.
(5) In addition, in this embodiment, as shown in FIG. 3, the rod-like body 6 is fastened in a state in which the bolt 5 is inserted through the through hole 61 of the rod-like body 6 and the internal space of the nut 4 and thus is fixed to the base member 3. At this time, the rod-like body 6 functions as a spacer used to maintain a constant distance between the head 52 of the bolt 5 and the flange part 42 of the nut 4.

For this reason, when the bolt 5 is fastened, the elastic body 7 can be suppressed from being deformed.

### 5. Modified example

In the above-described embodiment, as the exterior in which the exterior fixing mechanism is used, the exterior of the FTIR spectrophotometer was exemplified. However, the exterior fixing mechanism can also be applied to analysis devices other than the FTIR spectrophotometer.

Also, in the above-described embodiment, a case in which the plate-like member 9 was made of a resinous material and was formed through air-pressure molding was described. However, the plate-like member 9 may be made of a metallic material and be formed through sheet metal working.

In addition, in the above-described embodiment, a case in which the elastic body 7 was made of a rubber material was described. However, the elastic body 7 may be formed of a material with elasticity and such a material is not limited to a rubber material.

In addition, in the above-described embodiment, a case in which the outer circumferential surface of the rod-like body 6 had a hexagonal shape was described. However, the outer circumferential surface of the rod-like body 6 is not limited to a hexagonal shape. A gap can be formed between the outer circumferential surface of the rod-like body 6 and the through hole 71 of the elastic body 7 as long as the outer circumferential surface of the rod-like body 6 has a polygonal shape. Here, the outer circumferential surface of the rod-like body 6 is not limited to a polygonal shape and may have other shapes such as a circular shape or an elliptical shape.

## Claims

1. An exterior fixing mechanism for an analysis device which fixes an exterior configured to accommodate parts used for analysis therein, the exterior fixing mechanism for the analysis device comprising:
a first exterior member (1) including an elastic body (7) with a groove (72) formed in an outer circumferential surface, wherein the elastic body (7) is cylindrical and the groove (72) is ring-shaped; and
a second exterior member (2) including a plate-like member (9) having a concave part (92) into which the elastic body (7) is fitted,
wherein the elastic body (7) is inserted into the concave part (92) in a direction in which the plate-like member (9) extends and a circumferential edge of the concave part (92) is fitted into the groove (72) so that the first exterior member (1) and the second exterior member (2) are fixed, the exterior fixing mechanism being **characterized in that**:
the first exterior member (1) includes a rod-like member (6) fitted inside the elastic body (7) in an axial direction thereof,
an outer circumferential surface of the rod-like member (6) is formed in a polygonal shape, and
the elastic body (7) has a through hole (71) formed in a circular shape when viewed in the axial direction thereof.

2. The exterior fixing mechanism for the analysis device according to claim 1, wherein the concave part (92) has an inlet (92a) into which the elastic body (7) is inserted, and a width (L2) of the inlet (92a) is smaller than an outer diameter (L1) of the groove (72).

3. The exterior fixing mechanism for the analysis device according to claim 1, wherein the rod-like member (6) has a through hole (61) extending in the axial direction thereof and is fixed by fastening a bolt (5) inserted through the through hole (61) to a fixed position.

## Patentansprüche

1. Außenfixiermechanismus für eine Analysevorrichtung, der eine Außenseite fixiert, die konfiguriert ist, um Teile aufzunehmen, die für die Analyse darin verwendet werden, wobei der Außenfixiermechanismus für die Analysevorrichtung umfasst:
ein erstes Außenelement (1), das einen elastischen Körper (7) mit einer Nut (72) beinhaltet, die in einer äußeren Umfangsfläche ausgebildet ist, wobei der elastische Körper (7) zylindrisch ist und die Nut (72) ringförmig ist; und
ein zweites Außenelement (2), das ein plattenförmiges Element (9) beinhaltet, das einen konkaven Teil (92) aufweist, in das der elastische Körper (7) eingepasst ist,
wobei der elastische Körper (7) in den konkaven Teil (92) in einer Richtung eingesetzt wird, in der sich das plattenförmige Element (9) erstreckt und eine Umfangskante des konkaven Teils (92) in die Nut (72) eingepasst ist, so dass das erste Außenelement (1) und das zweite Außenelement (2) fixiert ist, wobei der Außenfixiermechanismus **dadurch gekennzeichnet ist, dass**:
das erste Außenelement (1) ein stabförmiges Element (6) beinhaltet, das innerhalb des elastischen Körpers (7) in einer axialen Richtung davon eingepasst ist,
eine äußere Umfangsfläche des stabförmigen Elements (6) in einer polygonalen Form ausgebildet ist, und
der elastische Körper (7) ein Durchgangsloch (71) aufweist, das in einer kreisförmigen Form ausgebildet ist, wenn in der axialen Richtung davon betrachtet.

2. Außenfixiermechanismus für die Analysevorrichtung gemäß Anspruch 1, wobei der konkave Teil (92) einen Einlass (92a) aufweist, in den der elastische Körper (7) eingesetzt ist, und eine Breite (L2) des Einlasses (92a) kleiner ist als ein Außendurchmesser (L1) der Nut (72).

3. Außenfixiermechanismus für die Analysevorrichtung gemäß Anspruch 1,
wobei das stabförmige Element (6) ein Durchgangsloch (61) aufweist, das sich in einer axialen Richtung davon erstreckt und durch Befestigen eines Bolzens (5), der durch das Durchgangsloch (61) eingesetzt ist, an einer festen Position fixiert ist.

## Revendications

1. Mécanisme de fixation extérieur pour un dispositif d'analyse qui fixe un extérieur configuré afin de renfermer des pièces utilisées pour l'analyse à l'intérieur de celui-ci, le mécanisme de fixation extérieur pour le dispositif d'analyse comprenant :
un premier élément extérieur (1) incluant un corps élastique (7) avec une rainure (72) formée dans une surface circonférentielle extérieure, dans lequel le corps élastique (7) est cylindrique et la rainure (72) est en forme d'anneau ; et
un second élément extérieur (2) incluant un élément de type plaque (9) ayant une partie concave (92) dans lequel le corps élastique (7) est ajusté,
dans lequel le corps élastique (7) est inséré à l'intérieur de la partie concave (92) dans une direction dans laquelle l'élément de type plaque (9) s'étend et un bord circonférentiel de la partie concave (92) est inséré à l'intérieur de la rainure (72) de sorte que le premier élément extérieur (1) et le second élément extérieur (2) soient fixés, le mécanisme de fixation extérieure étant **caractérisé en ce que** :
le premier élément extérieur (1) inclut un élément de type tige (6) inséré à l'intérieur du corps élastique (7) dans une direction axiale de ce dernier ;
une surface circonférentielle extérieure de l'élément de type tige (6) est formée dans une forme polygonale, et
le corps élastique (7) possède un alésage traversant (71) formé dans une forme circulaire lorsque il est visualisé dans la direction axiale de ce dernier.

2. Mécanisme de fixation extérieure pour le dispositif d'analyse selon la revendication 1, dans lequel la partie concave (92) possède une entrée (92a) dans laquelle le corps élastique (7) est inséré, et une largeur (L2) de l'entrée (92a) est plus petite qu'un diamètre extérieur (L1) de la rainure (72).

3. Mécanisme de fixation extérieure pour le dispositif d'analyse selon la revendication 1, dans lequel l'élément de type tige (6) possède un alésage traversant (61) s'étendant dans la direction axiale de ce dernier et est fixé en fixant un boulon (5) inséré à travers l'alésage traversant (61) en une position fixe.
